# EUROPÄISCHE PATENTSCHRIFT

(11) **EP 0 901 608 B1**
(45) Veröffentlichungstag und Bekanntmachung des Hinweises auf die Patenterteilung: **06.11.2002**
(21) Anmeldenummer: 97923996.9
(22) Anmeldetag: 23.05.1997
(51) Int. Cl.: G01C 9/20

(54) **OPTISCHER SENSOR ZUR NEIGUNGSWINKELBESTIMMUNG**
OPTICAL SENSOR FOR DETERMINING THE ANGLE OF INCLINATION
DETECTEUR OPTIQUE POUR LA DETERMINATION D'UN ANGLE D'INCLINAISON

(30) Priorität: 25.05.1996 DE 19621189
(43) Veröffentlichungstag der Anmeldung: 17.03.1999
(73) Patentinhaber: Leica Geosystems AG, 9435 Heerbrugg (CH)
(72) Erfinder: BRAUNECKER, Bernhard, CH-9445 Rebstein (CH); ROGERS, John, Rice, Sierra Madre, CA 91024 (US); GÄCHTER, Bernhard, F., CH-9436 Balgach (CH)
(74) Vertreter: Büchel, Kurt F.
(86) Internationale Anmeldenummer: EP9702661
(87) Internationale Veröffentlichungsnummer: WO97045701

(56) Entgegenhaltungen:
- EP-A- 0 302 821
- OPTICS LETTERS, Bd. 18, Nr. 19, 1.Oktober 1993, Seiten 1594-1596, XP000396943 JAHNS J ET AL: "INTEGRATED PLANAR OPTICAL IMAGING SYSTEM WITH HIGH INTERCONNECTION DENSITY" in der Anmeldung erwähnt
- PATENT ABSTRACTS OF JAPAN vol. 009, no. 157 (P-369), 2.Juli 1985 & JP 60 032143 A (NEC HOME ELECTRONICS KK), 19.Februar 1985,

## Beschreibung

Die Erfindung bezieht sich auf einen optischen Sensor zur Neigungswinkelbestimmung mit
a) einer optischen Strahlungsquelle, ersten und zweiten strahlungsumlenkenden und abbildenden optischen Elementen, einem ortsauflösenden optoelektronischen Detektor und
b) einer im Strahlengang zwischen den ersten und zweiten optischen Elementen angeordneten Neigungsfläche, auf die die Strahlung der Strahlungsquelle fällt und die die Strahlung im nachfolgenden Strahlenverlauf in eine, von der Neigung des Sensors abhängige Richtung lenkt und dadurch neigungsabhängig den Ort des Bildes der Strahlungsquelle auf dem Detektor bestimmt.

Derartige bekannte Sensoren dienen hauptsächlich dazu, die Neigung oder Neigungsänderung von Geräten zu erfassen. Zu diesem Zweck sind sie mechanisch fest mit dem Gerät verbunden. Sie besitzen ein sich nach der Schwerkraft einstellendes Bauelement, welches einen Lichtstrahl bei unterschiedlicher Neigung des Geräts unterschiedlich ablenkt. Dem Neigungswinkel des Geräts ist also ein korrespondierender Ablenkwinkel des Lichtstrahls zugeordnet. Solche Neigungsmeßvorrichtungen können einerseits direkt in die Funktion des Geräts eingreifen, wie z.B. bei vermessungstechnischen Instrumenten wie Nivellieren oder Theodoliten. Hier dienen sie als Kompensatoren, die eine Abweichung der Neigung des Instruments von der idealen Horizontallage kompensieren, indem sie die Lage des Bildes des anvisierten Zielpunktes entsprechend verschieben.

Andererseits können Neigungsmesser in ihrer Funktion geräteunabhängig arbeiten und die Neigung anzeigen oder rechnerisch zur digitalelektronischen Weiterverarbeitung ermitteln. Ein mit einem Theodoliten verbundener, aber von diesem unabhängig arbeitender Neigungsmesser ist in DE 26 38 621 A1 beschrieben. Er ermittelt den Horizontierungsfehler des Theodoliten. In einer Recheneinheit werden die durch den Horizontierungsfehler erzeugten fehlerhaften Richtungsmeßwerte des Theodoliten rechnerisch korrigiert. Die Richtungsmeßwerte werden durch elektrooptische Abtastung eines aus parallelen hellen und dunklen Streifen bestehenden Moiremusters ermittelt. Als Maß für den Horizontierungsfehler des Theodoliten dient der Steuerstrom für eine Lageregelschaltung eines drehspulgetriebenen Pendels. Bei einer anderen Ausführungsform zur zweikoordinatigen Neigungsmessung ist eine zweikoordinatig empfindliche Schottky-Barrier-Diode auf einer Basisplatte montiert. Sie empfängt von einer Leuchtdiode her über einen Flüssigkeitsspiegel mit transparentem Glasboden und Anpassungsprisma einen Lichtstrahl, dessen Auftreffpunkt von der Neigung der Basisplatte abhängig ist.

In der DE 36 34 244 A1 ist ein optoelektronischer Neigungssensor beschrieben, bei dem sich im Strahlengang des Strahlungssenders ein lichtbrechendes oder lichtreflektierendes flüssiges Medium befindet. Sind Strahlungssender und Strahlungsempfänger oberhalb der Flüssigkeitsoberfläche angeordnet, so wird die Reflexion des Lichts an der Flüssigkeitsoberfläche zur Neigungsmessung ausgenutzt. Befindet sich der Strahlungssender oberhalb und der Strahlungsempfänger unterhalb der Flüssigkeit, so wird die Brechung des in die Flüssigkeit eintretenden Lichts genutzt. Je nach Neigung des Systems stellt sich ein entsprechender Reflexions- bzw. Brechungswinkel ein und bestimmt dadurch den Ort des auf den Detektor auftreffenden Lichtstrahls.

Aus der DE 26 36 706 A1 ist eine Neigungsmeßvorrichtung bekannt, bei der an einer Flüssigkeitsoberfläche ein von unten durch die Flüssigkeit hindurchgehender Lichtstrahl totalreflektiert wird. Die Flüssigkeitsoberfläche dient auch hier als ein sich selbsttätig auf die Schwerkraftrichtung einstellendes Bauelement. Alternativ kann zur Ablenkung des Lichtstrahls auch ein an einem Pendel befestigter Spiegel verwendet werden. Der Lichtstrahl wird von einem Objektiv erzeugt, in dessen Brennpunkt sich eine Leuchtdiode befindet. Nach der Totalreflexion an der Ffüssigkeitsoberfläche wird er durch ein zweites Objektiv auf einen photoelektrischen Empfänger fökussiert, so daß der Lichtsender auf dem Empfänger, eine zweikoordinatig empfindliche Schottky-Barrier-Diode, abgebildet wird. Bei einer Verkippung der gerätefest angeordneten Objektive und Leucht- und Empfangsdiode bewegt sich das Bild der Leuchtdiode auf dem Empfänger um eine durch die Verkippung nach Richtung und Größe festgelegte Strecke. Dies führt zu einer entsprechenden Änderung der Ausgangssignale des Empfängers, die durch eine elektronische Schaltung registriert und ausgewertet werden.

Ebenfalls mit dem Effekt der Totalreflexion an einer Flüssigkeitsoberfläche arbeitet die in der EP 0 302 821 B1 angegebene Einrichtung zur Neigungsmessung. Hierbei sind auf der Unterseite einer formstabilen, transparenten Trägerplatte mehrere Prismen und Linsen zur Strahlführung sowie eine Lichtquelle und eine positionsempfindliche Fotodiode angeordnet. Auf der Oberseite liegt eine Flüssigkeit mit freibeweglicher Oberfläche direkt auf der Trägerplatte auf und wird von einer glockenartigen Dose zusammengehalten. Der Lichtstrahl gelangt über zwei Umlenkprismen und ein weiteres Prisma von unten durch die Trägerplatte in die Flüssigkeit, wird an deren Oberfläche totalreflektiert, tritt wieder durch die Trägerplatte und das letztgenannte Prisma hindurch und gelangt über zwei weitere Umlenkprismen und ein langgestrecktes Prisma auf die Fotodiode. Zwei der Umlenkprismen sind mit je einer Linse versehen, die die Leuchtfläche der Lichtquelle auf die positionsempfindliche Fotodiode abbilden. Die geforderte hohe optisch-mechanische und thermische Stabilität macht einen derartig aufwendigen Aufbau notwendig.

Insgesamt betrachtet enthalten alle genannten Neigungsmeßvorrichtungen zur Strahlführung und zur Abbildung der Strahlungsquelle auf dem Detektor einzelne optische Bauelemente wie Linsen und Prismen, die einzeln hergestellt, gefaßt, montiert und zueinander genau justiert werden müssen. Die meisten der Bauelemente bleiben verschiebbar und justierbar. Dadurch wird der optisch-mechanische Aufbau besonders aufwendig, wenn zugleich eine hohe Stabilität erreicht werden soll.

Es ist Aufgabe der Erfindung, bei gleichbleibender oder erhöhter Meßgenauigkeit und bei gleichbleibendem oder erweitertem Winkelmeßbereich den optischen Aufbau eines Neigungssensors aus Kosten-, Platzbedarfs- und Stabilitätsgründen und zur Erhöhung der Fertigungszuverlässigkeit zu miniaturisieren, wobei die Herstellung und Montage der optischen Bauteile möglichst in nur einem Arbeitsgang durchgeführt werden soll.

Die Aufgabe wird erfindungsgemäß dadurch gelöst, daß die optischen Elemente auf oder / und in einem Grundkörper aus optisch leitendem Material monolithisch integriert sind, wodurch die Strahlung innerhalb des Grundkörpers geführt wird, und daß der Grundkörper Oberflächenbereiche aufweist, aus denen die Strahlung nach den ersten optischen Elementen in Richtung der Neigungsfläche austritt und in die die Strahlung nach ihrer Reflexion an der Neigungsfläche in den Grundkörper wieder eintritt.

Vorteilhafte Weiterbildungen und.Ausgestaltungen der Erfindung sind durch die Merkmale der Unteransprüche gekennzeichnet.

Die monolithische Integration von optischen Elementen auf einem Quarzglassubstrat ist an sich bekannt. In Optics Letters, Vol. 18, No. 19 (Oct. 1, 1993), P. 1594-1596, wird zum Beispiel ein integriertes planares optisches Abbildungssystem beschrieben, mit dem die Struktur eines Pixel-Arrays von einer Eingangsseite zu einer Ausgangsseite eines hybrid aufgebauten Abbildungssystems über einen geschlossenen Strahlengang übertragen wird.

Erfindungsgemäß wird die Strahlungsführung so gestaltet, daß die Strahlung den Grundkörper in einem bestimmten Oberflächenbereich verläßt, um auf die Neigungsfläche zu treffen. Nach der Reflexion an der Neigungsfläche tritt die Strahlung wieder in den Grundkörper ein. Dabei sind alle Lageveränderungen der Strahlung auf dem Detektor ausschließlich auf eine Richtungsveränderung der Strahlung außerhalb des Grundkörpers zurückzuführen. Die Strahlungsführung im Grundkörper durch die monolithisch integrierten optischen Elemente bleibt stabil. Die monolithische Integration eröffnet darüber hinaus eine große Vielfalt an Gestaltungsmöglichkeiten für die optischen Elemente und eine einfache Anpassung bei der Forderung nach einer höheren Meßgenauigkeit und einem erweitertem Meßbereich des Neigungswinkels.

Der Begriff der monolithischen Integration von optischen Elementen auf oder / und in einem Grundkörper soll hier sowohl im engeren als auch in einem weiteren Sinne verstanden werden. Streng monolithisch integriert bedeutet, daß alle optischen Elemente aus ein und demselben Grundkörper hervorgehen - direkt bei der Herstellung des Grundkörpers oder bei dessen Bearbeitung. So können beispielsweise optische Elemente aus dem Grundkörper herausgeätzt, herausgefräst oder in dem Grundkörper eingeätzt, eingefräst oder entsprechende Strukturen eingraviert, eingepreßt oder eingeprägt sein. Ebenso können sie auch durch Blankpressen oder durch Spritzgußverfahren entstehen.

Werden mehrere solcher Grundkörper fest und unlösbar miteinander verbunden, so soll diese Gesamtheit ebenfalls eine monolithische Einheit darstellen.

Im erweiterten Sinne soll als monolithische Integration auch die Replikation von optischen Elementen gelten. Dabei werden verformbare Materialien auf dem Grundkörper aufgebracht und mittels einer Abdruckform in eine bestimmte geometrische Form gebracht und dann z.B. durch chemische, thermische oder UV-Behandlung in ihrer Geometrie und auf dem Grundkörper fixiert. Dadurch sind die optischen Elemente bereits bei ihrer Erzeugung unlösbar zueinander ausgerichtet.

Schließlich sollen auch optische Elemente, die durch Aufdampfen von Materialien auf dem Grundkörper erzeugt werden, als monolithisch integriert verstanden werden.

Wie in vielen Anwendungen der Photonik werden auch bei einem modernen Neigungssensor eine Reihe von Anforderungen an das zugehörige optische System gestellt. Eine präzise Ausrichtung der optischen Komponenten untereinander und mechanische und thermische Langzeitstabilität werden ebenso gefordert wie eine geringe Größe des optischen Aufbaus und niedrige Herstellkosten. Für Vorrichtungen aus frei aufgebauten einzelnen optischen Komponenten ist es nicht möglich, alle Bedingungen gleichzeitig zu erfüllen. Alle bekannten Lösungen stellen Kompromisse mit Schwerpunkt auf einzelne Anforderungen dar. Erfindungsgemäß führt die monolithische Integration von optischen Bauelementen auf einem Grundkörper für einen Neigungssensor zu einem zuverlässigen, kompakten und kostengünstigen optischen System, das nahezu alle Anforderungen gleichzeitig erfüllt.

Ein optisches Element kann für sich allein auf einem Grundkörper monolithisch integriert werden. Jedoch ergeben sich die großen Vorteile der monolithischen Integration durch die gleichzeitige Herstellung einer Vielzahl von gleichartigen oder verschiedenartigen optischen Elementen auf einem gemeinsamen Grundkörper. So können alle für den Neigungssensor notwendigen abbildenden und strahlungsumlenkenden optischen Elemente als komplette Einheit in einem Herstellungsprozeß gleichzeitig entstehen. Dadurch ist die Fertigungszuverlässigkeit einer solchen Einheit sehr hoch.

Bei herkömmlichen optischen Aufbauten aus Einzelelementen werden unterschiedliche Materialien für die optischen Elemente und deren Fassungen und Halterungen verwendet, die unterschiedliche Materialeigenschaften wie unterschiedliche Wärmeausdehnungskoeffizienten besitzen. Demgegenüber sind die in einem einzigen Grundkörpermaterial monolithisch integrierten optischen Elemente hinsichtlich mechanischer und thermischer Einflüsse erheblich langzeitstabiler. Zudem sind sie aufgrund ihrer Herstellung bereits gegenseitig justiert und fest "montiert". Eine Verstellung oder Dejustage ist nicht mehr möglich. Durch den Wegfall von Montage- und Justierarbeiten werden Arbeitskosten eingespart und eine Massenproduktion ermöglicht. Auch die Materialkosten sind durch die Reduzierung vieler einzelner Komponenten zu einem einzigen Bauteil erheblich geringer. Nicht zuletzt bedeutet der kompakte Aufbau einer abbildenden Optik aus monolithisch integrierten optischen Elementen auf einem kleinen Grundkörper ein äußerst geringes Gewicht und eine sehr geringe Platzbeanspruchung im Vergleich zu einer herkömmlich aufgebauten Optik. Dies ist insbesondere beim Einsatz von tragbaren Vermessungsinstrumenten wie Theodoliten oder Digital-Nivellieren von Vorteil. Ganz in Analogie zu dem in solchen Geräten vorhandenen modernen elektronischen Aufbau mit den integrierten Schaltkreisen der Mikrochips wird somit auch der optische Aufbau leicht und kompakt gestaltet.

Für die Strahlungsführung können reflektive, refraktive oder diffraktive optische Elemente verwendet werden, die sich zusammen mit der Strahlungsquelle, der neigungsempfindlichen Fläche und dem positionsempfindlichen Detektor als monolithische Einheit aufbauen lassen. Als nichtabbildende optische Elemente zur Strahlungsführung innerhalb des Grundkörpers eignen sich vorteilhaft die Oberflächen des Grundkörpers selbst, an denen durch Totalreflexion eine Strahlungsumlenkung stattfinden kann. Eine Strahlungsumlenkung kann auch durch reflektierende Filme erreicht werden, die an bestimmten Stellen auf der Grundkörperoberfläche aufgebracht werden.

Die reflektiven optischen Elemente können aber auch sphärische oder asphärische Oberflächen besitzen. Dadurch erhalten sie zusätzlich auch abbildende Eigenschaften. Somit läßt sich die gesamte Optik des Neigungssensors allein mit verschiedenen reflektiven Elementen darstellen und als eine einzige monolithische Einheit herstellen.

Eine solche Einheit kann beispielsweise aus Glas durch Blankpressen oder aus Kunststoff durch Spritztechnik hergestellt werden. Die so hergestellte monolithische Einheit kann auf einer Trägerplatte befestigt werden oder kann selber die Rolle der Trägerplatte übernehmen. Darüber hinaus können auch mehrere monolithische Einheiten - ggf. auch mit verschiedenen Grundkörpermaterialien - zu einer gesamten Einheit zusammengefaßt werden. Dabei können die einzelnen Einheiten einen bestimmten Abstand voneinander besitzen oder auch direkt aufeinander aufgebaut sein. Dadurch erhält man einen größeren Spielraum für die optischen Weglängen oder für die Anordnung der integrierten optischen Elemente untereinander.

In Analogie zu dem beschriebenen integrierten optischen Aufbau mit reflektiven optischen Elementen können ebenso refraktive Elemente auf einem Grundkörper oder auf mehreren Grundkörpern monolithisch integriert werden. Auch mit integrierten refraktiven optischen Elementen sind sowohl strahlungsumlenkende als auch abbildende Eigenschaften zu erreichen. Hierzu werden in bekannter Weise Prismen- und Linsenwirkungen ausgenutzt. Selbstverständlich ist eine Kombination von refraktiven und reflektiven optischen Elementen auf einem Grundkörper möglich. Aufgrund der monolithischen Integration ergeben sich für einen solchen Neigungssensor Kosten- und Platzersparnisse.

Der Platzbedarf der beschriebenen refraktiven bzw. reflektiven Lösungen kann durch Anwendung von Fresnellinsen bzw. Fresnelspiegeln noch weiter reduziert werden. Fresnellinsen und -spiegel sind optische Elemente, deren Flächen nur stufenweise kontinuierlich sind.

Bei Stufenabmessungen in der Größenordnung der verwendeten optischen Wellenlänge ändert sich der physikalische Mechanismus der Strahlungsablenkung. Anstelle refraktiver, resp. reflektiver Wirkung wird die Strahlungsbeeinflussung nunmehr durch Beugungsphänomene physikalisch beschrieben.

Mit Hilfe derartiger diffraktiver Strukturen werden gleichfalls strahlungsumlenkende und abbildende optische Elemente hergestellt, wie z.B. mit einer Fresnel - Zonenplatte oder mit einem holographischen Element, also einem Element mit lokal variabler Gitterstruktur.

Derartige Mikrogitterstrukturen sind auf verschiedene Weise in der Oberfläche eines Grundkörpers implementierbar. Zum einen können die Strukturen dort durch Ätzen oder Prägen hergestellt werden. Zum anderen können sie auf die Grundkörperoberfläche aufgebracht, z.B. aufgedampft oder aufgeklebt werden. Verschiedene Lithografie-, Ätz- und Aufdampfverfahren sind bekannt. Insbesondere werden mit optischer Lithografie und reaktivem lonenätzen Strukturen auf Glassubstraten hergestellt.

Eine andere Gruppe von Verfahren zur Herstellung integrierter optischer Elemente sind holografische Verfahren, bei denen sich durch Interferenz mehrerer Lichtverteilungen Gebiete mit räumlich variierender Intensität erzeugen lassen. Bringt man eine, mit lichtempfindlichem Lack bestrichene Glasplatte in das Interferenzgebiet, kommt es zu einer entsprechend räumlich variablen Belichtung, die nach Entwicklung des Lacks als beugende Gitterstruktur im Sinne der oben gemachten Ausführungen wirkt.

Bei dem erfindungsgemäßen Neigungssensor wird mittels der abbildenden, monolithisch integrierten optischen Elemente entweder die Strahlungsquelle auf dem Detektor abgebildet oder, wie weiter unten erläutert wird, ein Intensitätsmuster auf den Detektor projiziert. Dabei kann die Strahlung der Strahlungsquelle grundsätzlich divergent, konvergent oder parallel auf die Neigungssfläche fallen. Bei konvergenter oder divergenter Inzidenz auf die Neigungsfläche ändert sich die scheinbare Entfernung der Strahlungsquelle mit der Neigung. Damit lassen sich vorteilhaft Abbildungsfehler - insbesondere die Bildfeldwölbung und der Astigmatismus - im nachfolgenden optischen System korrigieren.

Die einfallende Wellenfront wird von der Neigungsfläche reflektiert und durch ein weiteres monolithisch integriertes optisches Element oder durch eine Kombination mehrerer solcher Elemente in einer Einstellebene fokussiert. In dieser Ebene befindet sich ein ortsempfindlicher optoelektronischer Detektor zur Feststellung der Lage der so erzeugten Abbildung der Strahlungsquelle, z.B. eines Lichtflecks. Je nach Neigung des Neigungssensors verändert sich der Winkel zwischen der Neigungsfläche und der auftreffenden und somit auch der von ihr reflektierten Wellenfront, was konsequenterweise zu einer Wanderung des Lichtflecks auf dem Detektor führt. Aus den Schwerpunktskoordinaten des Lichtflecks auf einem zweidimensional ortsempfindlichen Detektor, z.B. einem CCD-Array, lassen sich auf bekannte Weise die beiden Neigungswinkel des Neigungssensors bezüglich einer, als Referenz dienenden, horizontierten Einstellung ermitteln.

Wird die Strahlung von der Neigungsfläche mehr als einmal reflektiert, so ist die Verschiebung des Lichtflecks ein entsprechend Vielfaches der Verschiebung im Falle der Einzelreflexion.

Die Genauigkeit der Neigungsbestimmung hängt von der Genauigkeit der Lagebestimmung des Lichtflecks auf dem Detektor ab. Diese wiederum wird bestimmt einenteils von der Art und Größe des Lichtflecks in der Detektorebene und andererseits vom räumlichen und radiometrischen Auflösungsvermögen des Detektors. Bei der Verwendung optoelektronischer Detektorarrays ist das Ortsauflösungsvermögen durch die Größe der Pixel gegeben. Man wird folgerichtig versuchen, die Größe des Lichtflecks durch Wahl der Lichtquellenausdehnung und durch Wahl der Vergrößerung der Optik der Pixelgröße anzugleichen.

Jedoch gelangt man in der Praxis in Konflikt mit der radiometrischen Auflösung des Detektors, da durch die starke Fokussierung die lokale Strahlungsdichte u.U. so hoch geraten kann, daß der Detektor im Sättigungsbereich betrieben wird. Durch Ausleuchten (Blooming, etc.) kommt es zu einer Verschlechterung der räumlichen Auflösung und einer unerwünschten Erhöhung der Responsezeit, schlimmstenfalls sogar zu einer Gefährdung des Detektors.

Der Widerspruch ist lösbar, wenn statt einer punktförmigen Lichtverteilung auf dem Detektor ein Intensitätsmuster, also eine strukturierte Intensitätsverteilung mit mehr als einem Intensitätsmaximum erzeugt wird. Dann verteilt sich die einfallende Lichtleistung in radiometrisch günstiger Weise über einen ausgedehnten Detektorpixelbereich, behält aber durch die Feinstrukturierung die Vorteile hoher räumlicher Auflösung bei. Die Lageauswertung einer ausgedehnten Struktur ist robust und führt zu einem besseren Signal-Rauschverhältnis und somit zu einer höheren Meßgenauigkeit.

Eine Lichtverteilung mit mehr als einem Intensitätsmaximum kann mit verschiedenen Mitteln erreicht werden. Eine erste Möglichkeit stellt eine strukturierte Strahlungsquelle dar. Die Strukturierung kann beispielsweise durch eine mit einem Lochmuster versehene Abdeckung erfolgen, die vor einer flächenhaften Strahlungsquelle oder im aufgeweiteten Strahl einer punktförmigen Strahlungsquelle angeordnet ist. Es kann auch die Strahlungsquelle selbst aus einzelnen Strahlungsquellen aufgebaut sein, wie es beispielsweise bei einem Array von lichtemittierenden Dioden (LED-Array) der Fall ist. Die einzelnen Dioden bilden ein Muster, das auf dem Detektor abgebildet wird und dessen Position dort ausgewertet wird. Durch den Vergleich mit einer aus einer Kalibrierung mit bekanntem Neigungswinkel ermittelten Musterposition läßt sich die aktuelle Richtung der auf den Detektor einfallenden Strahlung und somit die Neigung des Neigungssensors ermitteln. Anstelle der Kalibrierung kann auch die Kenntnis der Anordnung der einzelnen Strahlungsquellen auf dem LED-Array herangezogen werden, um aus dem aktuell aufgenommenen Muster die Neigung des Neigungssensors zu bestimmen.

Eine andere Möglichkeit zur Erzeugung eines solchen Musters auf dem Detektor ergibt sich aus der Verwendung von ortsabhängig teildurchlässigen oder teilreflektierenden Objekten, die von der Strahlungsquelle beleuchtet werden. Diese Objekte werden anstelle der Strahlungsquelle auf dem Detektor abgebildet. Bei einem für die Strahlung teildurchlässigen Objekt variiert die Transmission des Objekts ortsabhängig, so daß also die Transmissionsfunktion mehr als ein Maximum besitzt. Bei einem die Strahlung teilreflektierenden Objekt wird dessen ortsabhängig reflektierende Struktur genutzt, um ebenfalls ein Intensitätsmuster zu erzeugen. Solche Objekte können auf dem Grundkörper monolithisch integriert werden.

Eine weitere Möglichkeit, eine Intensitätsverteilung mit mehr als einem Intensitätsmaximum auf dem Detektor zu erzeugen, ergibt sich durch eine geeignete räumliche Beeinflussung der Wellenfront der Strahlung. Dabei können verschiedene optische Eigenschaften, wie z.B. refraktive, reflektive oder polarisierende Eigenschaften ausgenutzt werden ebenso wie auch die Beugung an entsprechend strukturierten optischen Elementen im Strahlengang zwischen Lichtquelle und Detektor. Vorteilhafterweise werden die wellenfrontformenden optischen Elemente monolithisch auf dem Grundkörper integriert.

Beispielsweise läßt sich die Wellenfront durch unterschiedliche Materiatdicken oder unterschiedliche Brechungsindices der optischen Elemente räumlich beeinflussen. Um eine gewünschte Intensitätsstruktur auf dem Detektor zu erreichen, kann die Wellenfrontmodulation und somit die sie erzeugende Dickenfunktion, resp. Brechungsindexfunktion entsprechend variiert werden. In ähnlicher Weise kann ein strukturierendes optisches Element auch durch ortsabhängig unterschiedlich polarisierende Bereiche dargestellt werden. Dichroitische Materialien liefern eine lineare Polarisation, die je nach Ausrichtung dieser Materialien in Abhängigkeit des Ortes zu verschiedenen Polarisationsrichtungen führen. Im allgemeinen Fall sind auch unterschiedliche elliptische Polarisationszustände möglich, die z.B. mit örtlich variierender Dicke von doppelbrechenden Materialien erzeugt werden. Mit Hilfe eines Analysators entsteht aus der örtlichen Polarisationsmodulation, die in diesem Fall die Strukturfunktion des strukturierenden optischen Elements darstellt, eine entsprechende Intensitätsverteilung auf dem Detektor.

Das die Wellenfront strukturierende optische Element kann auf dem Grundkörper des Neigungssensors als separates optisches Element monolithisch integriert sein. Es kann aber auch zusammen mit einem abbildenden optischen Element aus einer gemeinsamen Struktur, z.B. einer Beugungsstruktur aufgebaut und monolithisch integriert sein, was zu einer verringerten Anzahl an integrierten optischen Elementen auf dem Grundkörper führt. Ein solches Element besitzt somit zugleich abbildende und die Wellenfront strukturierende Eigenschaften.

Wird nach einer der genannten Methoden ein Intensitätsmuster auf dem Detektor erzeugt und ändert sich die Neigung des Neigungssensors, so verschiebt sich das gesamte Muster auf dem Detektor. Die Auswertung des gemessenen Musters, die beispielsweise mit der bekannten Methode der Mittelwertbildung oder durch Fit-Algorithmen erfolgen kann, liefert eine deutlich verbesserte Genauigkeit der Neigungsmessung gegenüber der Auswertung eines einzelnen Strahlungspunktes. Zudem werden Störungen im Strahlengang, die z.B. durch fertigungsbedingte, lokale Fehler hervorgerufen sein können, durch die Messung der Vielzahl von Strahlungspunkten des Intensitätsmusters leicht ausgeglichen.

Eine besondere Empfindlichkeit und damit ein besonders verbessertes Ortsauflösungsvermögen ergibt sich aus einer Intensitätsverteilung, deren Ortsgrundfrequenz oder eine ihrer harmonischen Ortsoberfrequenzen mit der Ortsgrundfrequenz der strahlungsempfindlichen Strukturen des Detektors ein niederfrequentes Überlagerungsmuster bildet. Das niederfrequente Überlagerungsmuster wirkt in derselben Art und Weise wie ein Moirémuster. Von Moirémustern ist bekannt, daß sie sehr empfindlich auf eine Verschiebung der sie erzeugenden Strukturen reagieren. Dies bedeutet hier, daß bereits bei einer sehr geringen Verschiebung der Intensitätsverteilung auf dem Detektor gegenüber dessen Pixelstruktur sich das niederfrequente Übertagerungsmuster in seiner Ortsfrequenz stark ändert. Die Änderung des Überlagerungsmusters ist also ein sehr empfindlich reagierender Indikator für Veränderungen der Intensitätsverteilung auf dem Detektor. Damit kann eine Ortsinformation um mehr als einen Faktor 100 besser aufgelöst werden als es von der Geometrie der Pixelstruktur des Detektors her möglich wäre.

Neben der Steigerung der Genauigkeit und der Robustheit der Winkelmessung bringt die Erzeugung einer strukturierten Lichtverteilung auf dem Detektor noch den Vorteil der Meßbereichserweiterung mit sich. Bei einer punktförmigen Lichtverteilung wird der Meßbereich des Neigungswinkels durch die Größe der Detektorfläche bestimmt. Bei einer strukturierten Intensitätsverteilung ist jedoch die Ausdehnung des räumlichen Strukturmeßbereichs bestimmend, wie folgendes Beispiel zeigt. Bereits durch Beugung an Begrenzungen von optischen Elementen entsteht auf dem Detektor eine Intensitätsverteilung mit einem Hauptmaximum und mehreren, beidseitig angeordneten Nebenmaxima. Dabei können die Nebenmaxima, also die Beugungsmaxima höherer Ordnung, sogar über die aktive Detektorfläche hinausreichen. Liegt aufgrund eines großen Einfallswinkels der Strahlung das Hauptmaximum, das der ursprünglichen punktförmigen Abbildung der Strahlungsquelle entspricht, nicht mehr auf der aktiven Detektorfläche, so kann es aus der Lage der Nebenmaxima rekonstruiert werden. Entscheidend ist nur, daß sich die Nebenmaxima identifizieren lassen, was prinzipiell wegen ihrer unterschiedlichen Intensitäten möglich ist.

Ebenso können die Intensitätsverteilungen, die durch die Abbildung der teildurchlässigen oder teilreflektierenden Objekte oder auch der strukturierten Strahlungsquelle auf dem Detektor entstehen, weit über die aktive Fläche des Detektors hinausreichen und dadurch den Meßbereich des Neigungswinkels erheblich erweitern. Auch bei großen Neigungswinkeln, die die Intensitätsverteilung entsprechend verschieben, kommen noch genügend Intensitätsmaxima innerhalb der aktiven Detektorfläche zu liegen.

Als Neigungsfläche dient eine Fläche, auf die die Strahlung der Strahlungsquelle fällt und mit ihr einen von der Neigung des Neigungssensors abhängigen Winkel bildet. Die Neigungsfläche stellt sich aufgrund der Schwerkraft in einer bestimmten Ebene ein. Diese Ebene ist horizontal, wenn eine Flüssigkeitsoberfläche verwendet wird und sich die Flüssigkeit frei bewegen kann. Die Flüssigkeit kann direkt mit dem Grundkörper des Neigungssensors in Kontakt sein und von einer geschlossenen, abgedeckten Wandung gehalten werden. Sie kann sich auch in einer geschlossenen Kapsel befinden, die mit dem Grundkörper verbunden wird. Eine Änderung des Einfallswinkels aufgrund einer veränderten Neigung bewirkt eine entsprechende Änderung des Ausfallswinkels der reflektierten Strahlung, die dadurch mit veränderter Richtung und somit an einem veränderten Ort auf den Detektor fällt.

Befindet sich oberhalb der Flüssigkeit ein optisches Medium geringerer optischer Dichte, beispielsweise Luft oder eine mit ihr nicht mischbare Flüssigkeit geringerer spezifischer Dichte, so wird eine von unten nach oben durch die Flüssigkeit laufende optische Strahlung totalreflektiert, wenn der Grenzwinkel der Totalreflexion überschritten wird. Diese Totalreflexion ist wegen der erhöhten Ausbeute der Strahlung von Vorteil, ist im Prinzip aber nicht zwingend notwendig für die Funktion des erfindungsgemäßen Neigungssensors.

Prinzipiell kann die Strahlung auch von oben auf die Flüssigkeitsoberfläche einfallen und die Reflexion an der Flüssigkeitsoberfläche genutzt werden.

Eine andere Ausführungsmöglichkeit einer sich nach der Schwerkraft einstellenden Neigungsfläche ist die Oberfläche eines bei Verkippung frei beweglichen Festkörpers. Der Festkörper kann in einer Flüssigkeit schwimmen oder er kann aufgehängt oder auf einer Unterstützung gelagert sein. Mit Hilfe der Strukturierungsmöglichkeiten der Mikromechanik kann ein solcher auf Kippung empfindlicher Festkörper auch mikroskopisch klein in einem Substrat hergestellt und gelagert werden. Somit ist auch die Neigungsfläche zusammen mit den optischen Elementen monolithisch integriert. Zur Neigungsmessung wird die Brechung oder die Reflexion der Strahlung an der Oberfläche des Festkörpers genutzt.

Im folgenden werden mehrere Ausführungsbeispiele der Erfindung anhand der Zeichnung näher erläutert. Es zeigt
- Fig. 1: eine schematische Querschnittsdarsteltung eines Neigungssensors mit reflektiven optischen Elementen, die im strengen Sinne monolithisch integriert sind,
- Fig. 1a: eine Variante von Fig.1 mit einem divergenten Strahlengang an der Neigungsfläche,
- Fig. 2: eine Variante von Fig.1 mit einer zusätzlichen Grundplatte,
- Fig. 3: eine schematische Querschnittsdarstellung eines Neigungssensors mit reflektiven optischen Elementen, die auf einem Grundkörper aufgebracht und mit diesem unlösbar verbunden sind,
- Fig. 4: eine Variante von Fig.3, bei der die optischen Elemente auf zwei verschiedenen Flächen des Grundkörpers angeordnet sind,
- Fig. 5: eine Variante von Fig.3, bei der die optischen Elemente mittels einer zusätzlichen Grundplatte auf zwei verschiedenen Flächen angeordnet sind,
- Fig. 6: eine schematische Querschnittsdarstellung eines Neigungssensors mit monolithisch integrierten refraktiven optischen Elementen,
- Fig. 7a: eine schematische Querschnittsdarstellung eines Neigungssensors mit monolithisch integrierten diffraktiven optischen Elementen,
- Fig. 7b: eine schematische räumliche Darstellung eines Neigungssensors gemäß Fig. 7a,
- Fig. 8: eine schematische Querschnittsdarstellung eines Neigungssensors mit einer strukturierten Strahlungsquelle, die mehr als ein Intensitätsmaximum besitzt,
- Fig. 9a: eine schematische Querschnittsdarstellung eines Neigungssensors mit einem monolithisch integrierten teilreflektierenden Objekt zur Erzeugung mehrerer Intensitätsmaxima,
- Fig. 9b: eine schematische räumliche Darstellung eines Neigungssensors mit einem teilreflektierenden Objekt gemäß Fig. 9a,
- Fig. 9c: eine schematische Querschnittsdarstellung eines Neigungssensors mit einem monolithisch integrierten teildurchlässigen Objekt zur Erzeugung mehrerer Intensitätsmaxima,
- Fig. 9d: ein Beispiel für die Struktur eines teilreflektierenden oder teildurchlässigen Objekts,
- Fig. 9e: ein weiteres Beispiel für die Struktur eines teilreflektierenden oder teildurchlässigen Objekts und
- Fig. 10: eine schematische Querschnittsdarsteilung eines Neigungssensors mit einem die Wellenfront strukturierenden optischen Element, das auf dem Detektor eine Lichtverteilung mit mehr als ein Intensitätsmaximum erzeugt.

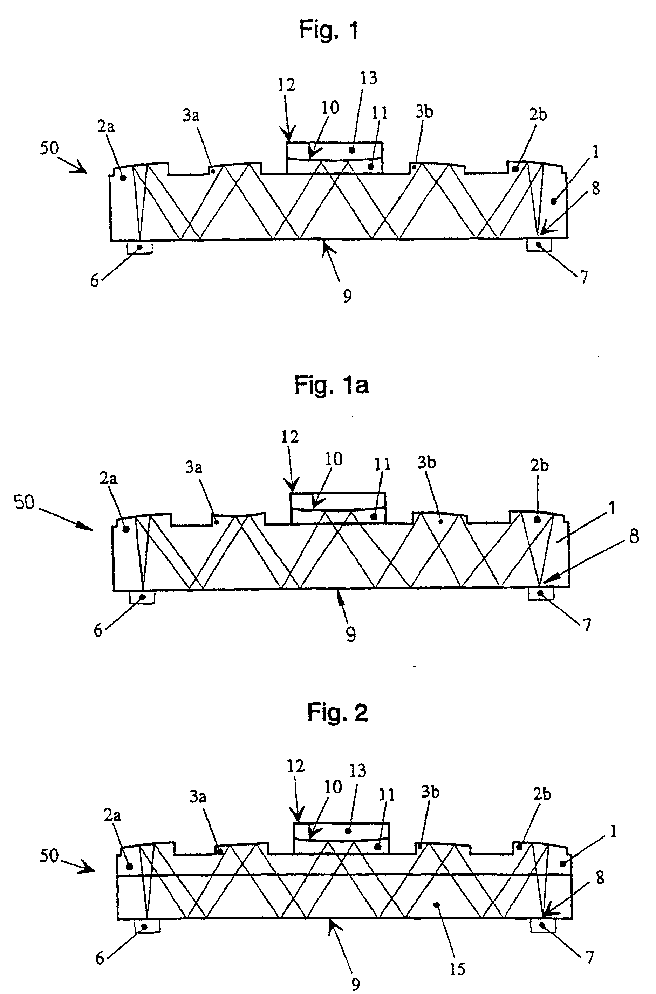

In Fig.1 ist ein erfindungsgemäßer Neigungssensor 50 schematisch im Querschnitt dargestellt. Er ist mit reflektiven optischen Elementen 2a, 2b, 3a, 3b ausgestattet, deren Reflexionseigenschaften für die Strahlungsführung ausgenutzt werden. Die optischen Elemente 2a, 2b, 3a, 3b sind gemäß der Definition zu Beginn der Beschreibung im strengen Sinn monolithisch integriert, d.h. sie bestehen aus ein und demselben Grundkörper 1 und sind bei dessen Herstellung oder Bearbeitung aus einem Stück hervorgegangen.

Die reflektiven optischen Elementen 2a, 2b, 3a, 3b sind in diesem Ausführungsbeispiel mit gekrümmten Oberflächen ausgebildet, weshalb sie abbildende Eigenschaften besitzen. Das divergente Strahlenbündel einer Strahlungsquelle 6 wird durch die optischen Elemente 2a und 3a zu einem parallel verlaufenden Strahlenbündel geformt, welches nach der Reflexion an einer Neigungsfläche 10 durch die optischen Elemente 3b und 2b auf einen ortsempfindlichen optoelektronischen Detektor 7 fokussiert wird. Somit wird die Strahlungsquelle 6 auf dem Detektor 7 abgebildet. Die zugehörigen Detektorsignale werden in einer hier nicht dargestellten Auswerteelektronik verarbeitet.

Die ebene Fläche 9 des Grundkörpers 1 dient der Strahlungsreflexion, um insgesamt einen kontinuierlichen Strahlengang zu gewährleisten. Zu diesem Zweck kann die Fläche 9 mit reflektierenden Materialien beschichtet oder bedampft sein. Diese Möglichkeit gibt es auch für die Oberflächen der reflektiven optischen Elemente 2a, 2b, 3a, 3b. Ebenso kann aber auch die Totalreflexion ausgenutzt werden.

Die Darstellung in Fig.1 zeigt alle Elemente des Neigungssensors 50 wie die Strahlungsquelle 6, das Gehäuse 12 mit der Neigungsfläche 10, den Detektor 7 und die optischen Elemente 2a, 2b, 3a, 3b linear hintereinander angeordnet. Dies ist für die Gesamtfunktion des Neigungssensors 50 aber nicht zwingend notwendig. Die genannten Elemente können auch seitlich versetzt zueinander auf bzw. in dem Grundkörper 1 monolithisch integriert sein, wobei die Strahtungsführung entsprechend ausgelegt wird.

Die Neigungsfläche 10 wird durch die Oberfläche einer Flüssigkeit 11 dargestellt, Die Flüssigkeit 11 ist in einem Gehäuse 12 aufgrund der eingeschlossenen Luftoder Gasblase 13 frei beweglich, so daß sich ihre Oberfläche nach der Schwerkraft stets in einer horizontalen Ebene einstellen kann. Dadurch verändert sich bei Verkippung des Neigungssensors 50 der Winkel zwischen der Neigungsfläche 10 und dem einfallenden bzw. dem reflektierten Strahlenbündel. Daraus wiederum ergeben sich veränderte Ortskoordinaten des Strahlungsflecks 8, der von den optischen Elementen 3b und 2b aus dem reflektierten Strahlenbündel punktförmig auf dem Detektor 7 erzeugt wird. Die Koordinaten des Strahlungsflecks 8 auf dem Detektor 7 bestimmen somit die Neigung des Neigungssensors 50.

Durch die optischen Elemente 2a und 3a wird gemäß Fig.1 ein paralleles Strahlenbündel erzeugt, das auf die Neigungsfläche 10 fällt und dort als Parallelstrahlenbündel reflektiert wird. Wie weiter oben bereits erwähnt kann das Strahlenbündel jedoch auch divergent oder konvergent auf die Neigungsfläche 10 fallen, was bei bestimmten Abbildungsfehlern der optischen Elemente 2a, 2b, 3a, 3b günstig ist. Fig.1a zeigt ein divergent auf die Neigungsfläche 10 fallendes Strahlenbündel. Durch die Krümmung der Oberfläche des optischen Elements 3a wird die Erzeugung eines Strahlenbündels mit einer bestimmten Divergenz angedeutet. Nach der Reflexion an der Neigungsfläche 10 wird das divergente Strahlenbündel von den optischen Elementen 3b und 2b auf den Detektor fokussiert.

Der Strahlengang gemäß Fig.1 und Fig.1a verläuft - von seinem Weg in der Flüssigkeit 11 abgesehen - ausschließlich innerhalb des Grundkörpers 1. Deshalb kann diese Anordnung in hohem Maße kompakt gestaltet werden. Somit zeichnet sie sich auch durch eine hohe Stabilität aus. Allerdings werden an den Grundkörper 1 hohe Anforderungen hinsichtlich der optischen Homogenität gestellt.

Diese Anforderungen können mit einem dünneren Grundkörper 1 verringert werden. So zeigt Fig. 2 eine Variante des Neigungssensors 50 von Fig. 1, bei der zusätzlich eine Grundplatte 15 auf dem Grundkörper 1 aufgekittet oder aufgesprengt ist. Die Grundplatte 15 dient zum einen als Trägerplatte. Dadurch kann der Grundkörper 1 mit den monolithisch integrierten optischen Elementen 2a, 2b, 3a, 3b vorteilhafterweise dünn gehalten werden. Über die Dicke der Grundplatte 15 wird zudem ein Anpassungsfreiheitsgrad, z.B. für eine Nachfokussierung gewonnen. Die Grundplatte 15 kann aus dem gleichen Material bestehen wie der Grundkörper 1. Die Gesamtfunktion der Anordnung gemäß Fig.2 ist dieselbe wie unter Fig.1 beschrieben.

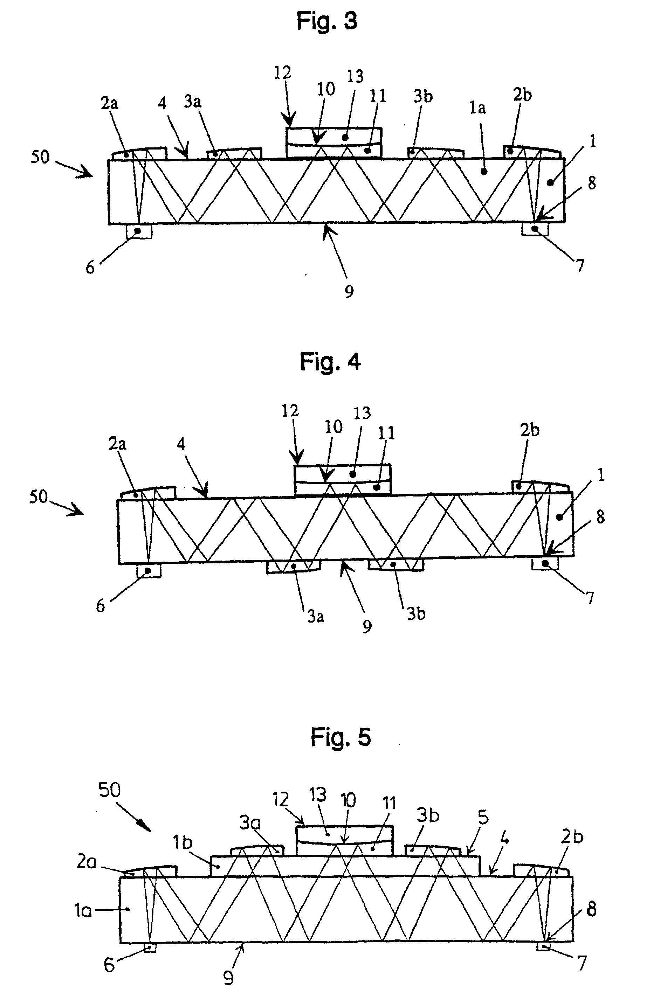

Fig. 3 zeigt eine schematische Querschnittsdarstellung eines Neigungssensors 50 mit reflektiven optischen Elementen 2a, 2b, 3a, 3b, die durch Replikation auf einer Fläche 4 auf dem Grundkörper 1 erzeugt wurden. Bei der Replikation werden verformbare Materialien auf dem Grundkörper 1 aufgebracht und mit Hilfe eines Werkzeugs, z. B. einer Negativform, zu geeigneten, die optischen Eigenschaften bestimmenden Strukturen gepreßt. Diese Strukturen werden durch chemische, thermische oder UV-Behandlung fixiert. Die optischen Elemente 2a, 2b, 3a, 3b sind damit bereits bei ihrer Erzeugung gegeneinander ausgerichtet und unlösbar mit dem Grundkörper 1 verbunden. Sie sind auf einer einzigen Fläche 4 des Grundkörpers 1 angeordnet. Die Funktionsweise ist die gleiche wie unter Fig.1 beschrieben.

In Fig. 4 ist eine Variante der Darstellung von Fig. 3 zu sehen, bei der die optischen Elementen 2a, 2b, 3a, 3b auf zwei verschiedenen Flächen 9 und 4 angeordnet sind.

Ebenso sind auch in Fig. 5 die optischen Elemente 2a, 2b, 3a, 3b auf zwei unterschiedlichen Flächen 4 und 5 angeordnet, die zu den Grundkörpern 1a und 1b gehören. Die Grundkörper 1a und 1b sind als Platten mit ebenen Oberflächen ausgebildet. Grundsätzlich können die Flächen 4, 5 und 9 bei allen Ausführungsbeispielen auch gekrümmt sein. Sie können sogar als Linsenoberflächen dienen. Die Grundkörper 1a und 1b können aus verschiedenen Materialien bestehen.

Über die Darstellung gemäß Fig. 5 hinausgehend können natürlich auch mehr als 2 der in Fig. 5 gezeigten Grundkörper 1a und 1b verwendet werden, um so einen mehrstöckigen Neigungssensor aufzubauen. Ebenso können auch zusätzliche optische Elemente 2a, 2b, 3a und 3b sowohl auf den Flächen 4 und 5 als auch auf der Fläche 9 monolithisch integriert werden. Damit lassen sich optische Abbildungseigenschaften verbessern. Weiterhin können auch an den Flächen 4 und 5 selbst zusätzliche Reflexionen stattfinden derart, wie sie an der Fläche 9 in Fig.5 dargestellt sind. Durch die Anzahl der Reflexionen werden die Längen der optischen Wegstrecken zwischen der Strahlungsquelle 6, den optischen Elementen 2a, 3a, den Elementen 3b, 2b und dem Detektor 7 bestimmt. Somit ergibt sich ein zusätzlicher Freiheitsgrad für die optischen Abstände der abbildenden Elemente 2a, 2b, 3a, 3b. Dies kann auch durch unterschiedliche Dicken der Grundkörper 1a und 1b oder durch Verwendung unterschiedlichen Materials der Grundkörper 1a und 1b geschehen.

Selbstverständlich sind alle unter der Figurenbeschreibung von Fig.4 und Fig.5 genannten Variationssmöglichkeiten in Analogie auch mit den Neigungssensoren 50 gemäß der Figuren 1 oder 2 realisierbar.

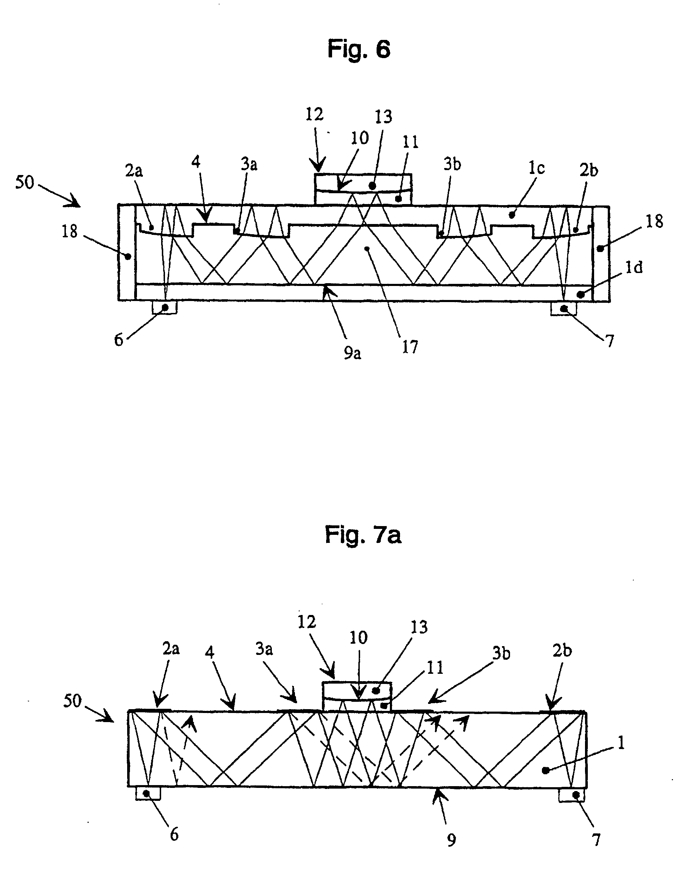

Fig. 6 zeigt eine schematische Querschnittsdarstellung eines Neigungssensors 50 mit refraktiven optischen Elementen 2a, 2b, 3a, 3b, die in einem Grundkörper 1c monolithisch integriert sind. Bei diesen optischen Elementen werden deren Brechungseigenschaften für die Strahlungsführung ausgenutzt. Der Grundkörper 1c ist mit einer Platte 1d über eine mechanische Halterung 18 starr verbunden. Die Strahlungsquelle 6 und der Detektor 7 befinden sich auf der Unterseite der Platte 1d. Das Medium 17 zwischen dem Grundkörper 1c und der Platte 1d besteht im einfachsten Fall aus Luft, kann aber auch aus anderen gasförmigen, flüssigen oder festen Substanzen mit geeignetem Brechungsindex bestehen.

Ist das Medium 17 eine Flüssigkeit, so kann zumindest ein Teil ihrer Oberfläche zugleich auch als Neigungsfläche 10 dienen. Dazu wird an geeigneter Stelle eine Gasblase 13 eingeschlossen. In diesem Fall kann das Gehäuse 12 mit der Flüssigkeit 11 entfallen.

Die Strahlung der Strahlungsquelle 6 wird bei Übergängen zwischen dem Medium 17 und dem Grundkörper 1c gebrochen. Durch die gekrümmte Oberflächen der refraktiven optischen Elemente 2a, 2b, 3a, 3b ergeben sich abbildende Eigenschaften. Dabei werden an die Krümmung der Oberflächen geringere Genauigkeitsanforderungen gestellt als es bei den oben beschriebenen reflektiven optischen Elementen erforderlich ist.

Die Oberfläche 9a der Platte 1d reflektiert die Strahlung, so daß sich ein fortlaufender Strahlengang ergibt. Auch in diesem Ausführungsbeispiel wird die Strahlungsquelle 6 auf dem Detektor 7 abgebildet.

Natürlich kann die Platte 1d durch einen dem Grundkörper 1c ähnlichen Grundkörper mit weiteren optischen Elementen 2a, 2b, 3a, 3b ersetzt werden, so daß die monolithisch integrierten refraktiven Elemente 2a, 2b, 3a, 3b auf zwei unterschiedlichen Flächen angeordnet sind. Darüber hinaus sollen für den Neigungssensor 50 mit refraktiven optischen Elementen 2a, 2b, 3a, 3b auch alle Ausführungsformen in Analogie zu den Varianten der Darstellungen in den Figuren 1a bis 5 gelten.

Fig. 7a zeigt eine schematische Querschnittsdarstellung eines Neigungssensors 50 mit monolithisch integrierten diffraktiven optischen Elementen 2a, 2b, 3a, 3b, die auf einer Fläche 4 angeordnet sind. Bei diesen optischen Elementen werden deren beugende Eigenschaften zur Strahlungsführung ausgenutzt. Aufgrund dieser Eigenschaften erzeugt jedes der diffraktiven Elementen 2a, 2b, 3a, 3b eine Strahlung mit mehreren Beugungsordnungen. Die verschiedenen Beugungsordnungen unterscheiden sich durch ihre Strahlungsrichtung. Ein jeweils nachfolgendes diffraktives optisches Element ist dabei so angeordnet, daß es die Strahlung mehrerer Beugungsordnungen - zumindest aber die Strahlung einer Beugungsordnung - empfangen kann. Dies wird mit den durchgezogenen Linien in Fig. 7a symbolisiert. Die Strahlung der übrigen Beugungsordnungen wird entweder absorbiert oder verläßt den Neigungssensor 50 anderweitig ohne dabei auf den Detektor 7 zu gelangen. Diesen Fall repräsentieren die gestrichelten Linien.

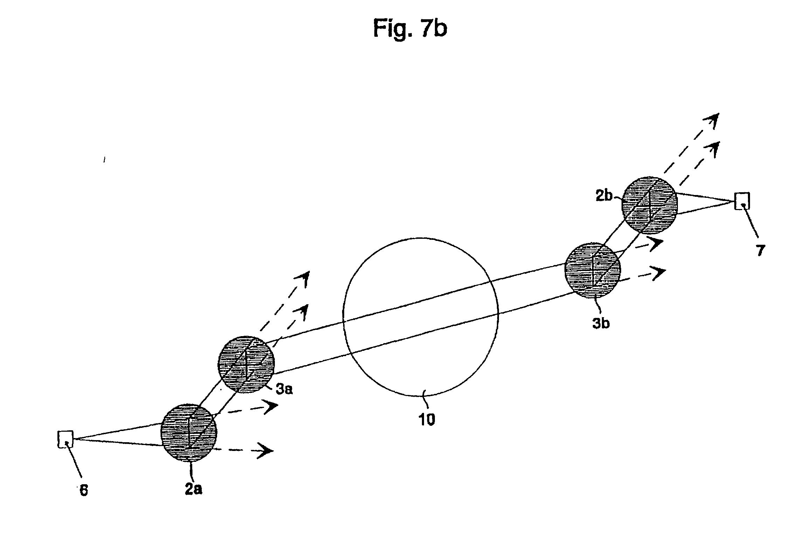

In Fig. 7b wird eine schematische räumliche Darstellung des Neigungssensors 50 nach Fig. 7a gezeigt. Hierbei wird die versetzte Anordnung der Strahlungsquelle 6, der optischen Elementen 2a, 2b, 3a, 3b, der Neigungsfläche 10 und des Detektors 7 zueinander deutlich. Dadurch erreicht beispielsweise die vom optischen Elements 2a erzeugte und gestrichelt dargestellte Strahlung der Beugung 0. Ordnung das optische Element 3a nicht, jedoch die Strahlung mindestens einer höheren Beugungsordnung (durchgezogene Linien). Aufgrund der Beugung gehorchen Einfallswinkel und Ausfallswinkel der Strahlung an den diffraktiven Elementen 2a, 2b, 3a, 3b nicht dem bekannten Reflexionsgesetz an spiegelnden Flächen. Den Beugungswinkeln entsprechend werden die diffraktiven Elemente 2a, 2b, 3a, 3b auf dem Grundkörper 1 angeordnet. Dabei soll letztlich den Detektor 7 die Strahlung vorzugsweise nur einer Beugungsordnung erreichen.

Die diffraktiven optischen Elemente 2a, 2b, 3a, 3b können auch in verschiedenen Flächen des Grundkörpers 1 monolithisch integriert sein analog zu den Darstellungen der Fig. 4 und 5 (Flächen 9, 4, 5). Auch eine analoge Ausführungsform gemäß Fig. 2 mit einer zusätzlichen Grundplatte 15 soll für den Neigungssensor 50 mit diffraktiven optischen Elementen 2a, 2b, 3a, 3b gelten.

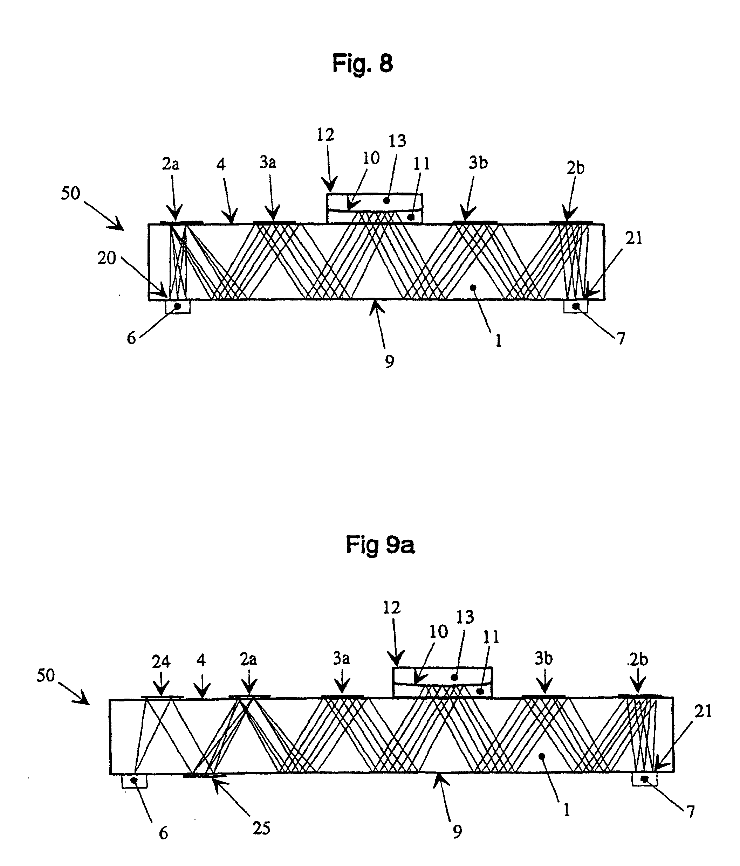

Bei den bislang gezeigten Varianten der Fig. 1 bis 7 ist die Lichtquelle 6 stets als punktförmig beschrieben, um das Augenmerk auf die verschiedenen Realisierungsmöglichkeiten des optischen Abbildungsganges zu lenken. In Fig.8 ist ein erfindungsgemäßer Neigungssensor 50 schematisch dargestellt, der sich von den bisherigen Varianten dadurch unterscheidet, daß seine Strahlungsquelle 6 eine Struktur aufweist. Als strukturierte Strahlungsquelle 6 kann beispielsweise eine mit einer gelochten Maske abgedeckte Strahlungsfläche oder ein Strahlungsquellenarray eingesetzt werden. Bei einem Strahlungsquellenarray sind einzelne Strahlungsquellen nebeneinander oder matrixförmig angeordnet und emittieren je einen Strahlungskegel. Als Strahlungsquellenarray kann ein Leuchtdiodenarray (LED-Array) dienen. Das Muster 20 der Strahlungsquellen wird auf dem Detektor 7 abgebildet und führt dort zu einer Intensitätsverteilung 21 mit einer entsprechenden Anzahl von Intensitätsmaxima. Wie oben im allgemeinen Teil der Beschreibung bereits erläutert ergibt die Auswertung der Koordinaten einer Vielzahl von Intensitätsmaxima eine höhere Meßgenauigkeit des Neigungssensors 50 verglichen mit einer Messung, bei der nur ein einziges Intensitätsmaximum ausgewertet wird. Zur Auswertung der Koordinaten der vom Detektor 7 aufgenommenen Intensitätsmaxima werden geeignete und bekannte Methoden wie z.B. Mittelwertbildung oder Fit-Algorithmen herangezogen.

Die optischen Elemente 2a, 2b, 3a, 3b in Fig.8 können reflektiver, refraktiver oder diffraktiver Natur sein. Es kann auch eine Kombination von reflektiven, refraktiven und diffraktiven optischen Elementen 2a, 2b, 3a, 3b auf dem Grundkörper 1 monolithisch integriert sein.

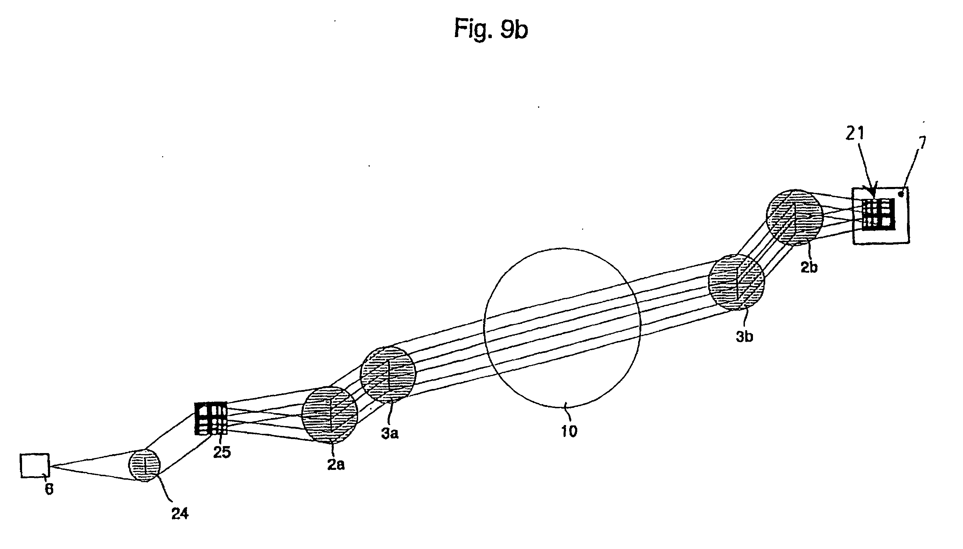

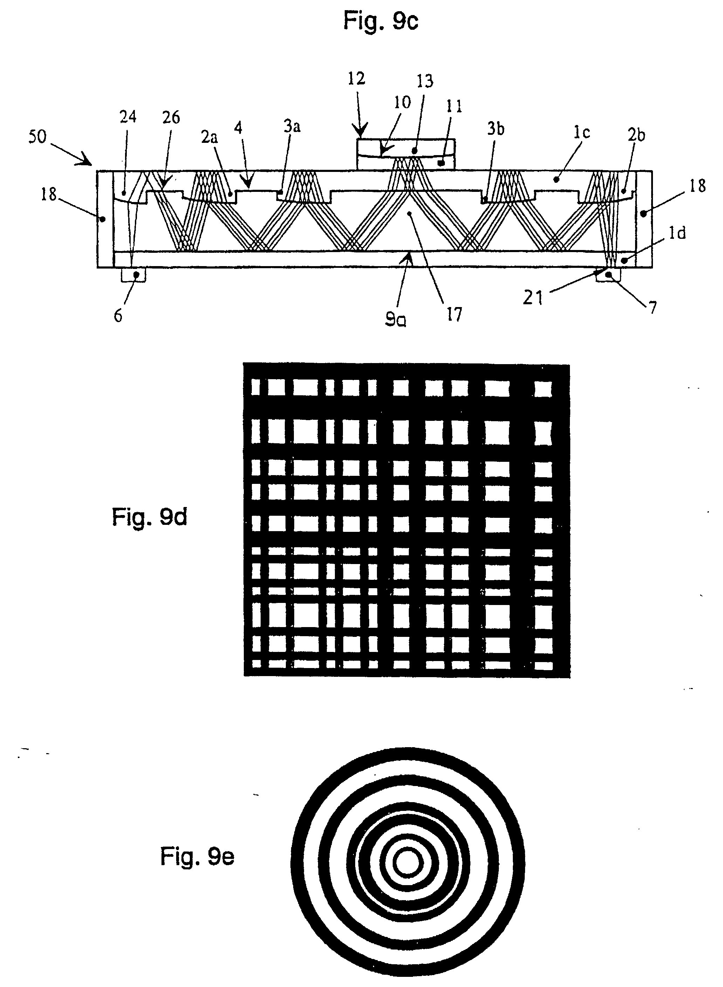

Eine Strahlungsverteilung mit mehreren Intensitätsmaxima auf dem Detektor 7 läßt sich auch mit Hilfe eines ortsabhängig teilreflektierenden Objekts 25 erzeugen, dessen Reflexionsfunktion mehr als ein Maximum besitzt. Es wird im Strahlengang zwischen der Strahlungsquelle 6 und dem Detektor 7 angeordnet. Beispielsweise wird gemäß der Querschnittsdarstellung in Fig.9a oder der schematischen räumlichen Darstellung in Fig.9b das teilreflektierende Objekt 25 mittels einer Kondensoroptik 24 beleuchtet. Anstatt der Strahlungsquelle 6 wird das teilreflektierende Objekt 25 auf dem Detektor 7 abgebildet. Das teilreflektierende Objekt 25, das vorzugsweise ebenfalls monolithisch integriert ist, kann aus verschiedenen Strukturen und Mustern aufgebaut sein. Zwei Beispiele sind in Fig. 9d und Fig. 9e gezeigt. Die weißen Flächen reflektieren die auffallende Strahlung, während die schwarzen Flächen die Strahlung absorbieren. Selbstverständlich sind beliebig andere Muster möglich. Auch kann der Übergang zwischen reflektierenden und absorbierenden Flächen kontinuierlich verlaufen, d.h. der Reflexionsgrad kann kontinuierlich abnehmen bzw. zunehmen. Die optischen Elementen 2a, 2b, 3a, 3b in Fig. 9a und Fig. 9b sind reflektiver, refraktiver oder / und diffraktiver Art.

Anstatt des teilreflektierenden Objekts 25 kann gemäß Fig. 9c auch ein ortsabhängig teildurchlässiges Objekt 26 verwendet werden, dessen Transmissionsfunktion mehr als ein Maximum besitzt. Das teildurchlässige Objekt 26 wird von der Kondensoroptik 24 beleuchtet und auf dem Detektor 7 abgebildet. Dort ruft es eine seiner Transmissionsfunktion entsprechende Intensitätsverteilung 21 hervor. Verschiedene Ausführungformen des teildurchlässigen Objekts 26 mit kontinuierlichen oder abrupten Transmissionsänderungen sind möglich. Für den letzteren Fall sind zwei Beispiele mit speziellen Formen in Fig. 9d und Fig. 9e dargestellt, wobei die weißen Flächen für die auftreffende Strahlung durchlässig sein sollen, während die schwarzen Flächen die Strahlung absorbieren. Vorzugsweise wird das teildurchlässige Objekt 26 als optisches Element im Grundkörper 1 monolithisch integriert.

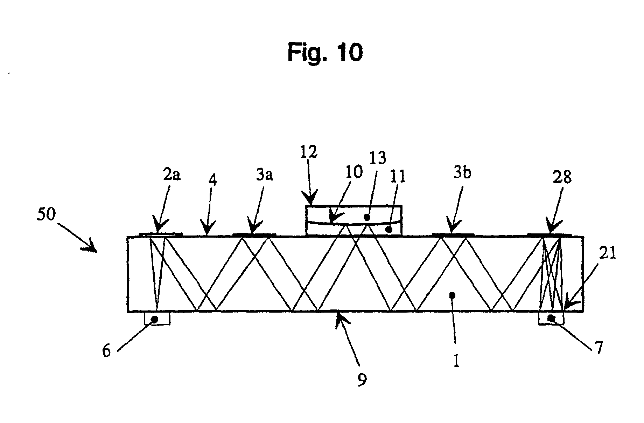

Um die Vorteile einer Intensitätsverteilung auf dem Detektor mit mehr als einem Maximum zu nutzen, bietet sich noch eine weitere, in Fig. 10 gezeigte Variante an. Diese gleicht im prinzipiellen Aufbau der Fig. 7a, besitzt aber folgende Besonderheit. Ein monolithisch integriertes optisches Element 28 erfüllt zwei Funktionen zugleich. Zum einen hat es abbildende Eigenschaften wie das optische Element 2b in Fig.7a. Andererseits besitzt es eine die Wellenfront der Strahlung derart strukturierende Funktion, daß durch Beugung auf dem Detektor 7 anstatt des punktförmigen Bildes der Strahlungsquelle 6 eine Intensitätsverteilung 21 mit mehr als einem Intensitätsmaximum entsteht. Aus dieser Intensitätsverteilung 21 auf dem Detektor 7, d.h. aus den Koordinaten der Intensitätsmaxima und aus der bekannten Strukturfunktion des optischen Elements 28 oder aus einer Kalibrierung läßt sich die Richtung der von der Neigungsfläche 10 kommenden Strahlung und damit die Neigung des Neigungssensors 50 mit sehr hoher Präzision ermitteln, wie weiter oben bereits beschrieben.

Selbstverständlich können die abbildenden und die Wellenfront strukturierenden Eigenschaften des optischen Elements 28 auch auf getrennten monolithisch integrierten optischen Elementen verteilt sein. So kann ein monolithisch integriertes optisches Element 28 ausschließlich die genannten die Wellenfront strukturierenden Eigenschaften besitzen.

## Patentansprüche

1. Optischer Sensor (50) zur Neigungswinkelbestimmung mit
a) einer optischen Strahlungsquelle (6), ersten und zweiten strahlungsumlenkenden und abbildenden optischen Elementen (2a,3a; 2b,3b), einem ortsauflösenden optoelektronischen Detektor (7) und
b) einer im Strahlengang zwischen den ersten und zweiten optischen Elementen (2a,3a; 2b,3b) angeordneten Neigungsfläche (10), auf die die Strahlung der Strahlungsquelle (6) fällt und die die Strahlung im nachfolgenden Strahlenverlauf in eine, von der Neigung des Sensors (50) abhängige Richtung lenkt und dadurch neigungsabhängig den Ort des Bildes der Strahlungsquelle (6) auf dem Detektor (7) bestimmt,
**dadurch gekennzeichnet, daß** die optischen Elemente (2a,3a; 2b,3b) auf oder / und in einem Grundkörper (1; 1a,1b;1c) aus optisch leitendem Material monolithisch integriert sind, wodurch die Strahlung innerhalb des Grundkörpers (1; 1a,1b;1c) geführt wird, und daß der Grundkörper (1; 1a,1b;1c) Oberflächenbereiche aufweist, aus denen die Strahlung nach den ersten optischen Elementen (2a, 3a) in Richtung der Neigungsfläche (10) austritt und in die die Strahlung nach ihrer Reflexion an der Neigungsfläche (10) in den Grundkörper (1; 1a,1b;1c) wieder eintritt.

2. Neigungssensor nach Anspruch 1, **dadurch gekennzeichnet, daß** die optischen Elemente (2a, 2b, 3a, 3b) im Grundkörper (1; 1a,1b;1c) durch Lithografie, durch Ätzen, Fräsen, Gravieren, Prägen, Blankpressen oder durch Spritzgußverfahren monolithisch integriert sind.

3. Neigungssensor nach Anspruch 1, **dadurch gekennzeichnet, daß** die optischen Elemente (2a, 2b, 3a, 3b) auf dem Grundkörper (1; 1a,1b;1c) aufgedampft oder repliziert sind.

4. Neigungssensor nach einem der vorherigen Ansprüche, **dadurch gekennzeichnet, daß** die optischen Elemente (2a, 2b, 3a, 3b) reflektive Elemente sind.

5. Neigungssensor nach einem der Ansprüche 1 bis 3, **dadurch gekennzeichnet, daß** die optischen Elemente (2a,2b,3a,3b) refraktive Elemente sind.

6. Neigungssensor nach einem der Ansprüche 1 bis 3, **dadurch gekennzeichnet, daß** die optischen Elemente (2a, 2b, 3a, 3b) aus diffraktiven Strukturen aufgebaut sind.

7. Neigungssensor nach Anspruch 6, **dadurch gekennzeichnet, daß** die optischen Elemente (2a, 2b, 3a, 3b) derart aufgebaut und zueinander angeordnet sind, daß ausschließlich die Strahlung aus nur einer Beugungsordnung letztlich den Detektor (7) erreicht.

8. Neigungssensor nach einem der Ansprüche 1 bis 3, **dadurch gekennzeichnet, daß** auf dem Grundkörper (1; 1a,1b;1c) eine Kombination von reflektiven, refraktiven und diffraktiven optischen Elementen (2a, 2b, 3a, 3b) monolithisch integriert ist.

9. Neigungssensor nach einem der vorherigen Ansprüche, **dadurch gekennzeichnet, daß** die optischen Elementen (2a, 2b, 3a, 3b) auf einer einzigen Fläche (4) des Grundkörpers (1; 1a,1b;1c) angeordnet sind.

10. Neigungssensor nach einem der Ansprüche 1 bis 8, **dadurch gekennzeichnet, daß** die optischen Elemente (2a, 2b, 3a, 3b) auf verschiedenen Flächen (4, 5, 9) des Grundkörpers (1; 1a,1b;1c) angeordnet sind.

11. Neigungssensor nach einem der vorherigen Ansprüche, **dadurch gekennzeichnet, daß** die optischen Elemente (2a, 3a) ein divergentes oder konvergentes Strahlenbündel erzeugen, welches auf die Neigungsfläche (10) fällt.

12. Neigungssensor nach einem der Ansprüche 1 bis 10, **dadurch gekennzeichnet, daß** die optischen Elemente (2a, 3a) ein paralleles Strahlenbündel erzeugen, welches auf die Neigungsfläche (10) fällt.

13. Neigungssensor nach einem der vorhergehenden Ansprüche, **dadurch gekennzeichnet, daß** zur Genauigkeitsverbesserung der Neigungsmessung die Strahlungsquelle (6) Strukturen aufweist, mit denen auf dem Detektor (7) eine Intensitätsverteilung (21) mit mehr als einem Intensitätsmaximum erzeugt wird.

14. Neigungssensor nach Anspruch 13, **dadurch gekennzeichnet, daß** die Strahlungsquelle (6) aus einzelnen Strahlungsquellen, insbesondere aus einem LED-Array aufgebaut ist.

15. Neigungssensor nach einem der Ansprüche 1 bis 12, **dadurch gekennzeichnet, daß** zur Genauigkeitsverbesserung der Neigungsmessung zwischen der Strahiungsquelle (6) und dem Detektor (7) ein die Strahlung ortsabhängig teilreflektierendes Objekt (25) angeordnet und monolithisch integriert ist, dessen Reflektionsfunktion mehr als ein Maximum besitzt und welches anstelle der Strahlungsquelle (6) auf dem Detektor (7) abgebildet wird.

16. Neigungssensor nach einem der Ansprüche 1 bis 12, **dadurch gekennzeichnet, daß** zur Genauigkeitsverbesserung der Neigungsmessung zwischen der Strahlungsquelle (6) und dem Detektor (7) ein für die Strahlung ortsabhängig teildurchlässiges Objekt (26) angeordnet und monolithisch integriert ist, dessen Transmissionsfunktion mehr als ein Maximum besitzt und welches anstelle der Strahlungsquelle (6) auf dem Detektor (7) abgebildet wird.

17. Neigungssensor nach einem der Ansprüche 1 bis 12, **dadurch gekennzeichnet, daß** zur Genauigkeitsverbesserung der Neigungsmessung zwischen der Strahlungsquelle (6) und dem Detektor (7) ein die Wellenfront der Strahlung derart strukturierendes optisches Element (28) angeordnet und monolithisch integriert ist, daß auf dem Detektor (7) eine Intensitätsverteilung (21) mit mehr als einem Intensitätsmaximum erzeugt wird.

18. Neigungssensor nach Anspruch 17, **dadurch gekennzeichnet, daß** das die Wellenfront strukturierende optische Element (28) zugleich abbildende Eigenschaften besitzt.

19. Neigungssensor nach einem der Ansprüche 13 bis 18, **dadurch gekennzeichnet, daß** die Ortsgrundfrequenz oder eine harmonische Ortsoberfrequenz der auf dem Detektor (7) erzeugten Intensitätsverteilung (21) mit der Ortsgrundfrequenz der strahlungsempfindlichen Strukturen des Detektors (7) ein niederfrequentes Überlagerungsmuster bildet.

20. Neigungssensor nach einem der vorherigen Ansprüche, **dadurch gekennzeichnet, daß** sich die Neigungsfläche (10) in einer durch die Schwerkraft bestimmten Ebene einstellt.

21. Neigungssensor nach Anspruch 20, **dadurch gekennzeichnet, daß** die sich nach der Schwerkraft richtende Neigungsfläche (10) eine Flüssigkeitsoberfläche ist.

## Claims

1. Optical sensor (50) for determining the angle of inclination, comprising
a) an optical radiation source (6), first and second radiation-deflecting and imaging optical elements (2a, 3a; 2b, 3b), a position-resolving optoelectronic detector (7) and
b) an inclination surface (10) which is arranged in the beam path between the first and the second optical elements (2a, 3a; 2b, 3b) and on which the radiation of the radiation source (6) is incident and which guides the radiation in the subsequent beam path in a direction dependent on the inclination of the sensor (50) and thus determines, in an inclination-dependent manner, the location of the image of the radiation source (6) on the detector (7),
**characterized in that** the optical elements (2a, 3a; 2b, 3b) are monolithically integrated on and/or in a base member (1; 1a, 1b; 1c) of optically conducting material, with the result that the radiation is guided inside the base member (1; 1a, 1b; 1c), and that the base member (1; 1a, 1b; 1c) has surface regions from which the radiation emerges after the first optical elements (2a, 3a) in the direction of the inclination surface (10) and in which the radiation enters the base member (1; 1a, 1b; 1c) again after its reflection at the inclination surface (10).

2. Inclination sensor according to Claim 1, **characterized in that** the optical elements (2a, 2b, 3a, 3b) in the base member (1; 1a, 1b; 1c) are monolithically integrated by lithography, etching, milling, engraving, embossing, blank pressing or injection moulding methods.

3. Inclination sensor according to Claim 1, **characterized in that** the optical elements (2a, 2b, 3a, 3b) are applied to the base member (1; 1a, 1b; 1c) by vapour deposition or are replicated thereon.

4. Inclination sensor according to any of the preceding claims, **characterized in that** the optical elements (2a, 2b, 3a, 3b) are reflective elements.

5. Inclination sensor according to any of Claims 1 to 3, **characterized in that** the optical elements (2a, 2b, 3a, 3b) are refractive elements.

6. Inclination sensor according to any of Claims 1 to 3, **characterized in that** the optical elements (2a, 2b, 3a, 3b) are composed of diffractive structures.

7. Inclination sensor according to Claim 6, **characterized in that** the optical elements (2a, 2b, 3a, 3b) are produced and arranged relative to one another in such a way that exclusively the radiation from only one diffraction order finally reaches the detector (7).

8. Inclination sensor according to any of Claims 1 to 3, **characterized in that** a combination of reflective, refractive and diffractive optical elements (2a, 2b, 3a, 3b) is monolithically integrated on the base member (1; 1a, 1b; 1c).

9. Inclination sensor according to any of the preceding claims, **characterized in that** the optical elements (2a, 2b, 3a, 3b) are arranged on a single surface (4) of the base member (1; 1a, 1b; 1c).

10. Inclination sensor according to any of Claims 1 to 8, **characterized in that** the optical elements (2a, 2b, 3a, 3b) are arranged on different surfaces (4, 5, 9) of the base member (1; 1a, 1b; 1c).

11. Inclination sensor according to any of the preceding claims, **characterized in that** the optical elements (2a, 3a) produce a divergent or convergent pencil of rays which is incident on the inclination surface (10).

12. Inclination sensor according to any of Claims 1 to 10, **characterized in that** the optical elements (2a, 3a) produce a parallel pencil of rays which is incident on the inclination surface (10).

13. Inclination sensor according to any of the preceding claims, **characterized in that**, for improving the accuracy of the inclination measurement, the radiation source (6) has structures by means of which an intensity distribution (21) having more than one intensity maximum is produced on the detector (7).

14. Inclination sensor according to Claim 13, **characterized in that** the radiation source (6) is composed of individual radiation sources, in particular of an LED array.

15. Inclination sensor according to any of Claims 1 to 12, **characterized in that**, for improving the accuracy of the inclination measurement, an object (25) which partly reflects the radiation depending on location and whose reflection function has more than one maximum and which is focused instead of the radiation source (6) on the detector (7) is arranged and monolithically integrated between the radiation source (6) and the detector (7).

16. Inclination sensor according to any of Claims 1 to 12, **characterized in that**, for improving the accuracy of the inclination measurement, an object (26) which is partly transparent to the radiation depending on location and whose transmission function has more than one maximum and which is focused instead of the radiation source (6) on the detector (7) is arranged and monolithically integrated between the radiation source (6) and the detector (7).

17. Inclination sensor according to any of Claims 1 to 12, **characterized in that**, for improving the accuracy of the inclination measurement, an optical element which structures the wavefront of the radiation in such a way that an intensity distribution (21) having more than one intensity maximum is produced on the detector (7) is arranged and monolithically integrated between the radiation source (6) and the detector (7).

18. Inclination sensor according to Claim 17, **characterized in that** the optical element (28) which structures the wavefront simultaneously has imaging properties.

19. Inclination sensor according to any of Claims 13 to 18, **characterized in that** the fundamental spatial frequency or a harmonic spatial frequency of the intensity distribution (21) produced on the detector (7) forms a low-frequency superposition pattern with the fundamental spatial frequency of the radiation-sensitive structures of the detector (7).

20. Inclination sensor according to any of the preceding claims, **characterized in that** the inclination surface (10) is established in a plane determined by gravitational force.

21. Inclination sensor according to Claim 20, **characterized in that** the inclination surface (10) oriented according to gravitational force is a liquid surface.

## Revendications

1. Capteur optique (50) pour la détermination d'un angle d'inclinaison, comportant
a) une source de rayonnement optique (6), des premiers et deuxièmes éléments optiques (2a, 3a ; 2b, 3b), déviant et illustrant le rayonnement, un détecteur optoélectronique (7) présentant une résolution locale, et
b) une surface d'inclinaison (10), disposée dans le trajet des rayons entre le premier et le deuxième éléments optiques (2a, 3a ; 2b, 3b), surface d'inclinaison sur laquelle tombe le rayonnement de la source de rayonnement (6) et qui dévie le rayonnement, dans la suite du trajet des rayons, en une direction dépendant de l'inclinaison du capteur (50) et détermine de ce fait, en fonction de l'inclinaison, le site de l'image de la source de rayonnement (6) sur le détecteur (7)
**caractérisé en ce que** les éléments optiques (2a, 3a ; 2b, 3b) sont intégrés de façon monolithique sur et/ou dans un corps de base (1; 1a, 1b ; 1c) réalisé en un matériau conducteur optique, faisant que le rayonnement est guidé à l'intérieur du corps de base (1; 1a, 1b ; 1c), et **en ce que** le corps de base (1; 1a, 1b ; 1c) présente des zones de surface d'où le rayonnement, après les premiers éléments optiques (2a, 3a), sort en direction de la face d'inclinaison (10), et dans lesquelles le rayonnement entre de nouveau dans le corps de base (1; 1a, 1b ; 1c) après sa réflexion sur la face d'inclinaison (10).

2. Capteur d'inclinaison selon la revendication 1, **caractérisé en ce que** les éléments optiques (2a, 2b, 3a, 3b) sont intégrés de façon monolithique dans le corps de base (1; 1a, 1b ; 1c) par lithographie, par morsure chimique, par fraisage, gravure mécanique, formage tridimensionnel, pressage d'ébauche ou par un procédé de moulage par injection.

3. Capteur d'inclinaison selon la revendication 1, **caractérisé en ce que** les éléments optiques (2a, 2b, 3a, 3b) sont appliqués sur le corps de base (1; 1a, 1b ; 1c) par vaporisation ou par réplication.

4. Capteur d'inclinaison selon l'une des revendications précédentes, **caractérisé en ce que** les éléments optiques (2a, 2b, 3a, 3b) sont des éléments réflectifs.

5. Capteur d'inclinaison selon l'une des revendications 1 à 3, **caractérisé en ce que** les éléments optiques (2a, 2b, 3a, 3b) sont des éléments réfractifs.

6. Capteur d'inclinaison selon l'une des revendications 1 à 3, **caractérisé en ce que** les éléments optiques (2a, 2b, 3a, 3b) sont construits à partir de structures diffractives.

7. Capteur d'inclinaison selon la revendication 6, **caractérisé en ce que** les éléments optiques (2a, 2b, 3a, 3b) sont construits et disposés les uns par rapport aux autres de manière à ce qu'exclusivement le rayonnement provenant seulement d'un ordre de diffraction atteigne finalement le détecteur (7).

8. Capteur d'inclinaison selon l'une des revendications 1 à 3, **caractérisé en ce que** sur le corps de base (1; 1a, 1b ; 1c) est intégrée de façon monolithique une combinaison d'éléments optiques (2a, 2b, 3a, 3b) réflectifs, réfractifs et diffractifs.

9. Capteur d'inclinaison selon l'une des revendications précédentes, **caractérisé en ce que** les éléments optiques (2a, 2b, 3a, 3b) sont disposés sur une face (4) unique du corps de base (1; 1a, 1b ; 1c).

10. Capteur d'inclinaison selon l'une des revendications 1 à 8, **caractérisé en ce que** les éléments optiques (2a, 2b, 3a, 3b) sont disposés sur des faces (4, 5, 9) différentes du corps de base (1; 1a, 1b ; 1c).

11. Capteur d'inclinaison selon l'une des revendications précédentes, **caractérisé en ce que** les éléments optiques (2a, 3a) produisent un faisceau de rayons divergent ou convergent qui tombe sur la surface d'inclinaison (10).

12. Capteur d'inclinaison selon l'une des revendications 1 à 10, **caractérisé en ce que** les éléments optiques (2a, 3a) produisent un faisceau de rayons parallèle tombant sur la surface d'inclinaison (10).

13. Capteur d'inclinaison selon l'une des revendications précédentes, **caractérisé en ce que**, pour améliorer la précision de la mesure d'inclinaison, la source de rayonnement (6) présente des structures à l'aide desquelles une distribution d'intensité (21), comportant un nombre de maxima d'intensités supérieur à un, est produit sur le détecteur (7).

14. Capteur d'inclinaison selon la revendication 13, **caractérisé en ce que** la source de rayonnement (6) est constituée de différentes sources de rayonnement, en particulier d'une matrice de diode électroluminescente LED.

15. Capteur d'inclinaison selon l'une des revendications 1 à 12, **caractérisé en ce que**, pour améliorer la précision de la mesure d'inclinaison, entre la source de rayonnement (6) et le détecteur (7) est disposé un objet (25) qui assure une réflexion partielle du rayonnement, selon le site, et est intégré de façon monolithique, objet dont la fonction de réflexion comporte un nombre de maxima supérieur à un et qui est illustré sur le détecteur (7), au lieu de la source de rayonnement (6).

16. Capteur d'inclinaison selon l'une des revendications 1 à 12, **caractérisé en ce que**, pour améliorer la précision de la mesure d'inclinaison, entre la source de rayonnement (6) et le détecteur (7), un objet (26) partiellement perméable au rayonnement, selon l'emplacement, est disposé et intégré monolithiquement, objet dont la fonction de transmission comporte un nombre de maxima supérieur à un et qui est illustré sur le détecteur (7), au lieu de la source de rayonnement (6).

17. Capteur d'inclinaison selon l'une des revendications 1 à 12, **caractérisé en ce que**, pour améliorer la précision de la mesure d'inclinaison, entre la source de rayonnement (6) et le détecteur (7) est disposé et intégré monolithiquement un élément optique (28) qui structure le front d'ondes du rayonnement, de manière qu'une distribution d'intensité (21), ayant un nombre de maxima d'intensité supérieur à un, soit produit sur le détecteur (7).

18. Capteur d'inclinaison selon la revendication 17, **caractérisé en ce que** l'élément optique (28), assurant la structuration du front d'ondes, possède en même temps des propriétés d'illustration.

19. Capteur d'inclinaison selon l'une des revendications 13 à 18, **caractérisé en ce que** la fréquence de base locale, ou une fréquence locale harmonique supérieure de la distribution d'intensité (21) produite sur le détecteur (7), forme, avec la fréquence de base locale des structures sensibles au rayonnement du détecteur (7), un motif de superposition à basse fréquence.

20. Capteur d'inclinaison selon l'une des revendications précédentes, **caractérisé en ce que** la surface d'inclinaison (10) se règle dans un plan déterminé sous l'effet de la force de gravité.

21. Capteur d'inclinaison selon la revendication 20, **caractérisé en ce que** la surface d'inclinaison (10) qui s'oriente selon la force de la gravité est une surface de liquide.
